# EUROPEAN PATENT APPLICATION

(11) **EP 3 778 421 A1**
(43) Date of publication of application: **17.02.2021**
(21) Application number: 20198598.3
(22) Date of filing: 07.03.2012
(51) Int. Cl.: B65D 65/46, B32B 27/12, B32B 27/36, C08L 67/04, C09D 167/04, B32B 27/30, C08L 23/08

(54) **HEAT-SEALABLE BIODEGRADABLE PACKAGING MATERIAL, ITS MANUFACTURING METHOD AND A PRODUT PACKAGE MADE THEREFROM AND A PRODUCT PACKAGE MADE THEREFROM**

(30) Priority: 07.03.2011 FI 20115226
(62) Divisional of application: 12755294.1
(71) Applicant: Stora Enso Oyj, 00101 Helsinki (FI)
(72) Inventor: NEVALAINEN, Kimmo, FI-48910 Kotka (FI)
(74) Representative: Berggren Oy, Helsinki & Oulu

(57) **Abstract**

The invention relates to a heat-sealable biodegradable packaging material, which comprises a fiber substrate 1 as well as one or more polymeric coating layers extruded thereon. According to the invention, the material includes a polymeric coating layer 2, which contains not less than 90 weight-% of polylactide and, as an additive, not more than 10 weight-% of acrylic copolymer blended therein for improving the adhesion and/or heat sealing ability of the layer. The invention encompasses also a method for manufacturing packaging material, as well as a product package obtained from the material.

## Description

The invention relates to a heat-sealable biodegradable packaging material, comprising a fiber substrate, as well as one or more polymeric coating layers extruded thereon. In addition, the invention relates to a method for manufacturing such a packaging material, as well as to a closed product package made from the material.

The fiber-based packaging material for product packages, such as packaging paper or board, is usually provided with a polymer coating for making the package leakproof and for closing the package by heat sealing. Multilayer coatings have possibly comprised an inner EVOH, PET or polyamide layer, which provides the material with an effective barrier to water vapor and oxygen, as well as an outer polyolefin layer for making the material heat-sealable. It is a drawback, however, that these widely popular coating polymers are not biodegradable.

The coating polymer that has been employed for a biodegradable packaging material is polylactide (PLA), which has reasonably good moisture and gas barrier properties adequate for many applications, but the use of which has involved a number of problems. As such, polylactide is stiff and brittle and requires a high extrusion temperature and a fairly large layer thickness for managing its adherence to the fiber substrate of a packaging material. As a result of the high temperature, polylactide runs a risk of degrading, and in extrusion, the molten web tends to experience occurrences of tearing along its edges and the extruded layer is easily left with pin holes.

As a solution to said problems, the specification FI-112624 (corresponds to EP-1094944 B1) discloses an inner adhesion layer to be coextruded together with an outer polylactide layer and consisting of a biodegradable polymer, examples of which including some commercial copolyesters, cellulose esters, and polyester amides. These have enabled facilitating the extrusion of polylactide and reaching adhesion that prevents detachment of the coating from the fiber substrate by peeling.

Another problem with the use of polylactide in an outermost coating layer of the packaging material is its fairly high melting temperature and the resulting poor heat sealing ability. As an improvement to this, the specification US-2002/0065345 A1 discloses a biodegradable aliphatic polyester, which is blended with polylactide and makes up a portion in the mixture of not less than 9%, as well as a tackifier which makes up a portion in the mixture of not less than 1%. As suitable aliphatic polyesters, the publication mentions polycaprolactone (PCL) and polybutylene succinate adipate (PBSA). According to the cited publication, the mixture can be extruded for a film that can be stretched axially or biaxially and attached to the fiber substrate by lamination. The result is a polymer-coated biodegradable packaging material with a remarkably improved heat sealing ability.

The specification US 2007/0259195 A1 describes polylactide-based films, which contain, blended therein, 0,1-10 weight-% of a biodegradable polymeric additive, the purpose of which is to increase the crystallinity of polylactide and thereby to improve its heat resistance. As examples of such additives, the specification discloses FEPOL 2040 marketed by Far Eastern Textile, as well as Ecoflex marketed by BASF, both consisting of polybutylene adipate terephthalate. According to the specification, such mixtures can be extruded in a conventional manner onto a fiber substrate, yet nothing is mentioned in the specification regarding the adhesiveness of the mixture to a substrate or the heat sealing ability of the obtained coating. The improved heat resistance of PLA pursued in the specification does not, however, suggest an improvement of the heat sealing ability but rather its weakening.

An objective of the present invention is to provide a heat-sealable biodegradable packaging material based on the use of polylactide, wherein a lesser amount of additive introduced into polylactide has enabled an improvement in the adhesiveness of polylactide in extrusion to a fiber substrate and/or in the heat sealing ability of a polylactide-containing surface layer of the material. According to the invention, the solution is that the material has a polymeric coating layer that contains not less than 90 weight-% of polylactide and, as an additive, not more than 10 weight-% of acrylic copolymer blended therein for improving the adhesion and/or heat sealing ability of the layer.

According to the invention, it has been found that a minor, suitably about 2-10 weight-% addition of acrylic copolymer improves significantly the heat sealing ability of a polylactide layer to itself and to another similar coating layer e.g. on the opposite side of a bilaterally coated packaging material, or also to an uncoated fiber substrate. At the same time, the additive improves the adhesion of polylactide in extrusion to a fiber substrate, such that the coating process does not require a multiphase film lamination as described in the specification US-2002/006534 A1. The acrylic copolymer used in the invention is not in itself biodegradable, but it makes up such a small portion of the mixture that it does not prevent the package from biodegrading in composting or in a landfill. A small amount of acrylic copolymer is also acceptable when the material is used for food containers, in which the polymer coating is in direct contact with the packaged product.

Preferably the portion of polylactide in the coating layer is not less than 95 weight-% and the portion of acrylic copolymer is not more than 5 weight-%.

According to the invention, the acrylic copolymer to be blended as an additive to polylactide can be especially ethylene-alkyl acrylate dipolymer or terpolymer. A particularly suitable additive is ethylene butyl acrylate glycidyl methacrylate terpolymer, which is known as such from publications WO2004/101642 A1 and WO2008/013699 A1. The terpolymer mentioned in the publications is described as an impact modifier for polylactide, and the publications also mention the use of such a PLA mixture as an oriented film attachable by lamination to constitute a coating for paper. The adhesiveness or heat sealability of the mixture of PLA and said terpolymer, or extruding the mixture directly on a fiber substrate, is not presented in the publications.

According to the invention, the polymer coating of a packaging material, such as paper or board, may consist of a single layer, and such a layer can be either on just one side of the material or on both sides thereof. The acrylic copolymer, present in the coating as an additive for PLA, improves in extrusion the adherence of the layer to a fiber substrate of the material, as well as the heat sealability of a coating to itself or to a coating layer or a bare fiber substrate on the opposite side of the material.

Alternatively, the fiber substrate may carry an inner polymeric biodegradable adhesive layer, as well as polylactide- and acrylic copolymer-containing outer surface layer, both delivered onto the fiber substrate by coextrusion. The adhesive layer is used to facilitate the cohesion of a polylactide web in extrusion, and the only role of acrylic copolymer blended in with polylactide is in this case to improve the heat sealing ability of polylactide. Appropriate polymer adhesives have been described in the above-cited specification FI 112624 B. One particularly preferred polymer for the adhesive layer is polybutylene adipate terephthalate (PBAT), which is a copolyester polymerized from terephthalic acid, adipinic acid and 1,4-butanediol monomers. PBAT may constitute the adhesive layer in itself or by being blended in with polylactide.

It is further possible to arrange a similar copolyester (e.g. PBAT) -containing layer in coextrusion between two polylactide layers as a binder to avoid tearing occurrences in molten polylactide webs.

According to yet another preferred embodiment of the invention, the fiber substrate is by coextrusion supplied with an inner layer of polylactide and ethylene butyl acrylate glycidyl methacrylate terpolymer against the fiber substrate, as well as with an outer surface layer of the mixture of polylactide and polybutylene adipate terephthalate.

The method according to the invention for manufacturing a heat-sealable packaging material as described above is characterized in that upon a fiber substrate is extruded or coextruded one or more polymeric layers, at least one of which contains not less than 90 weight-%, preferably not less than 95 weight-% of polylactide, as well as not more than 10 weight-%, preferably not more than 5 weight-% of acrylic copolymer blended therein for improving the adhesion and/or heat sealing ability of the layer.

The product package according to the invention is characterized in that it is made from a packaging material of the invention as described above and closed by heat sealing a surface layer of the material which contains not less than 90 weight-%, preferably not less than 95 weight-% of polylactide and not more than 10 weight-%, preferably not more than 5 weight-% of acrylic copolymer.

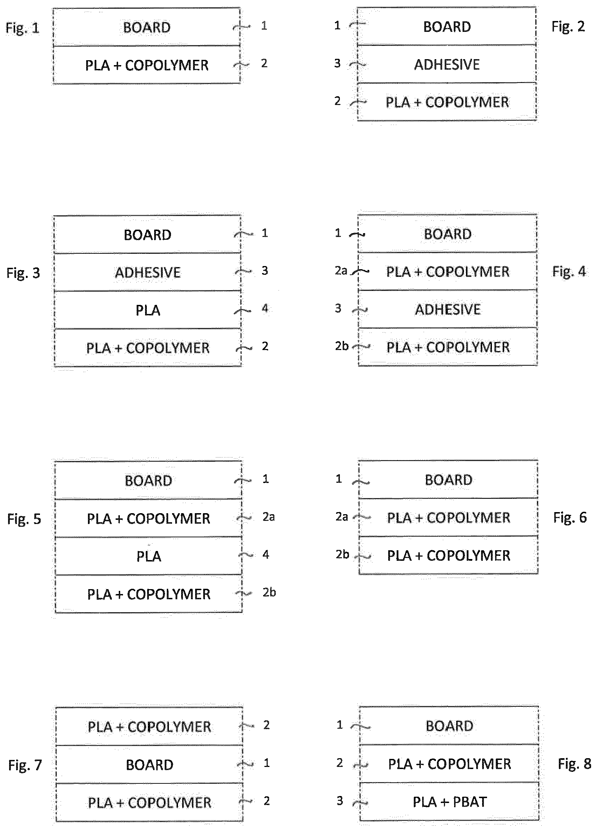

The invention will now be described in more detail with reference first to the accompanying drawing, wherein figures 1-8 illustrate layer structures in various embodiments for a packaging material of the invention.

The embodiment of fig. 1 for the invention comprises a fiber substrate, such as a packaging paper or board 1, as well as a biodegradable polymeric coating layer (PLA layer) 2, which is extruded thereon and comprises 90-98 weight-% of polylactide (PLA) and 2-10 weight-% of acrylic copolymer, such as e.g. ethylene butyl acrylate glycidyl methacrylate terpolymer. The fiber substrate 1 can have a weight of 40-350 g/m² and the PLA layer can have a weight of 10-30 g/m².

The packaging material of fig. 1 is capable of being folded and heat sealed for a bag or box type package, in which the PLA layer 2 can be sealed against itself or against an uncoated opposite surface of the material.

The embodiment shown in fig. 2 for the invention differs from that illustrated in fig. 1 in the sense that between the fiber substrate 1 and the PLA layer 2 is present a polymeric biodegradable adhesive layer 3 of e.g. polybutylene adipate terephthalate (PBAT). The polymer layers 2, 3 have been brought onto the fiber substrate 1 by coextrusion. The PLA layer 2 can have a weight in the range of 7-20 g/m² and the PBAT layer can have a weight in the range of 7-15 g/m². The PBAT layer enables making the PLA layer thinner and prevents its tearing occurrences in extrusion.

In fig. 3, the polylactide coating is divided into two sections 4, 2, such that the inner layer 4 consists totally of polylactide without added acrylic copolymer and the outer one 2 consists of the above-described mixture of PLA and acrylic copolymer. The innermost adhesive layer 3 can have a weight in the range of 7-15 g/m² and each of the polylactide-containing layers 4, 2 can have a weight in the range of 6-10 g/m². Hence, the heat-sealability enhancing acrylic copolymer is confined within the outermost PLA layer 2 of the material.

In fig. 4, the fiber substrate 1 carries a coextruded three-layer coating, wherein the innermost one is a PLA layer 2a, the next one is a binder layer 3a which may consist of the same copolyester (PBAT) as the adhesive layer 3 of fig. 2, and the outermost one is a PLA layer 2b making up a surface of the material. Each of the PLA layers 2a, 2b can have a weight in the range of 6-13 g/m² and the binder layer 3a can likewise have a weight in the range of 6-13 g/m². The acrylic copolymer additive of PLA improves the layer 2a in terms of its adhesion to paperboard and the layer 2b in terms of its heating sealing ability, and the binder layer 3 is used for improving the PLA layers 2a, 2b in terms of their cohesion.

The embodiment of fig. 5 only differs from fig. 4 in the sense that a middle coating layer 4 functioning as a bond for the PLA layers 2a, 2b consists of polylactide as such, in a manner similar to the layer 4 in fig. 3. Each layer 2a, 4, 2b can have a weight in the range of 6-13 g/m².

In fig. 6, on top of the fiber substrate 1 has been coextruded two PLA layers 2a and 2b having acrylic copolymer blended therein. The layers differ from each other in the sense that the blended portions therein are different, being in the inner layer e.g. 5 weight-%, in the outer one e.g. 2,5 weight-%. The weight of each layer 2a, 2b can be in the range of 7-15 g/m² with a possibility of the weights being equal or unequal to each other.

In fig. 7 is shown a modification for the embodiment of fig. 1, wherein upon the fiber substrate 1, on both sides thereof, have been extruded PLA layers 2 which are similar to each other. The weight of each PLA layer can be in the range of 10-30 g/m². The heat sealing of a package is based on sealing the PLA layers 2 to each other.

In the embodiment of fig. 8 for the invention, upon the fiber substrate have been coextruded an inner polylactide layer 2 blended with acrylic copolymer and an outer layer 5, having blended therein 35-90, preferably 45 weight-% of polylactide and 10-65, preferably 55 weight-% of polybutylene adipate terephthalate. The inner layer can have a weight in the range of 5-20 g/m², preferably 7-15 g/m², and the outer layer 5 can have a weight in the range of 5-20 g/m², preferably 7-15 g/m².

The subsequently described trials were conducted by testing the effect of acrylic copolymer on the heat sealing ability of polylactide and on the adhesion to an uncoated paperboard surface in extrusion.

### Heat sealing ability

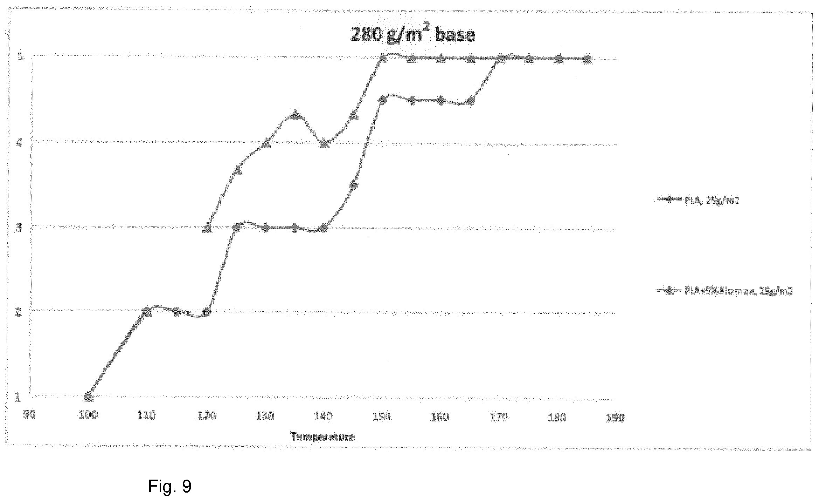

The test material was packaging board, which had a weight of 280 g/m² and had extruded thereon a single-layer coating whose composition was 95 weight-% of polylactide and 5 weight-% of ethylene butyl acrylate glycidyl methacrylate terpolymer (Biomax strong, marketed by DuPont) and whose weight was 25 g/m². The reference material was equivalent coated packing board, wherein the coating consisted totally of polylactide without said acrylic copolymer addition. Heat sealing tests were conducted, wherein the coated side of board was sealed to the uncoated opposite surface of board. The sealing pressure was 300 N the sealing time between heated sealing dies was 0,5 s. The results appear in the accompanying figure 9, which display graphically the strength of a resulting heat seal as a function of the sealing temperature for test and reference materials. On a scale of 1-5 along a vertical axis of the figure, the minimum value 1 stands for failed sealing without any sort of adhesion, and the maximum value 5 stands for total sealing, the opening attempt of which leads not to the opening of the seal by peeling but, instead, to tearing that occurs in the board. It is observed that by virtue of added acrylic copolymer the total heat sealing is achieved at a temperature clearly lower than with the reference material.

### Adhesion

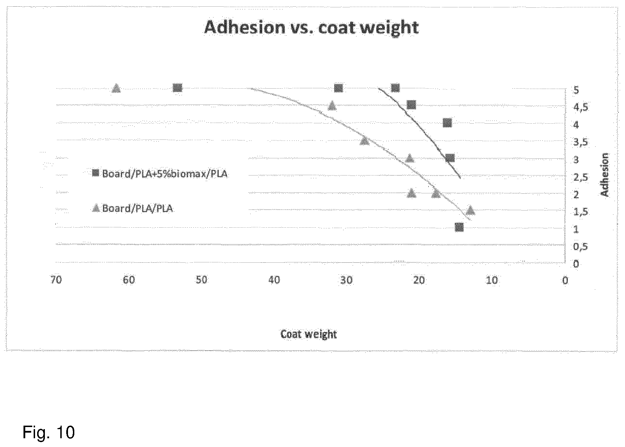

A test series was conducted, wherein upon packaging board, which had a weight of 280 g/m², were coextruded two coating layers with weights equal to each other, the inner one of which had a composition with 95 weight-% of polylactide and 5 weight-% of the above-mentioned ethylene butyl acrylate glycidyl methacrylate terpolymer and the outer one consisted of nothing but polylactide. In a reference test series, upon the same packaging board were coextruded two layers of plain polylactide with weights equal to each other without said acrylic copolymer addition. In both test series, studies were conducted regarding the adhesion of coating to board as a function of the total coating weight, and the results are presented graphically in the accompanying figure 10. On a scale of 1-5 along a vertical axis of the figure, the minimum value 1 stands for the absence of adhesion between the board and the extruded coating and the maximum value 5 stands for total adhesion, wherein the removal attempt leads not to the detachment of coating by peeling but, instead, to tearing that occurs in the board. It is observed that by virtue of added acrylic copolymer the total adhesion is achieved with a coating layer weight clearly lower than in reference tests.

## Claims

1. A heat-sealable biodegradable packaging material, which comprises a fiber substrate (1) as well as one or more polymeric coating layers extruded thereon, **characterized in that** the material includes a polymeric coating layer (2), which contains not less than 90 weight-% of polylactide and, as an additive, not more than 10 weight-% of acrylic copolymer blended therein for improving the adhesion and/or heat sealing ability of the layer.

2. A material as set forth in claim 1, **characterized in that** the additive is ethylene alkyl acrylate dipolymer or terpolymer.

3. A material as set forth in claim 2, **characterized in that** the additive is ethylene butyl acrylate glycidyl methacrylate terpolymer.

4. A material as set forth in any of the preceding claims, **characterized in that** the coating layer (2) contains not less than 95 weight-% of polylactide and, as an additive, not more than 5 weight-% of acrylic copolymer blended therein.

5. A material as set forth in any of the preceding claims, **characterized in that** the fiber substrate (1) carries a single-layer coating (2), which has been extruded thereon and which is heat-sealable.

6. A material as set forth in any of claims 1-4, **characterized in that** the fiber substrate (1) carries an inner polymeric biodegradable adhesive layer (3), as well an outer, said additive containing surface layer (2), both brought onto the fiber substrate by coextrusion.

7. A material as set forth in claim 6, **characterized in that** the adhesive layer consists of polybutylene adipate terephthalate.

8. A material as set forth in any of the preceding claims, **characterized in that** the fiber substrate (1) is on both sides provided with one or more extruded coating layers (2).

9. A material as set forth in claim 9, **characterized in that** the extruded coating layers (2) on both sides of the fiber substrate (1) are similar to each other.

10. A material as set forth in claim 1, **characterized in that** the fiber substrate (1) carries an inner layer (2) of polylactide and ethylene butyl acrylate glycidyl methacrylate terpolymer, and an outer surface layer (5) of a blend of polylactide and polybutylene adipate terephthalate, both brought onto the fiber substrate by coextrusion.

11. A method for manufacturing a heat-sealable packaging material as set forth in any of the preceding claims, **characterized in that** upon a fiber substrate (1) is extruded or coextruded one or more polymeric coating layers, at least one of which contains not less than 90 weight-% of polylactide and not more than 10 weight-% of acrylic copolymer blended therein for improving the adhesion and/or heat sealing ability of the layer (2).

12. A closed product package made of a packaging material as set forth in any of claims 1-9, which is closed by the heat sealing of a coating layer containing not less than 90 weight-% of polylactide and not more than 10 weight-% of acrylic copolymer.
